# EUROPÄISCHE PATENTSCHRIFT

(11) **EP 0 499 784 B1**
(45) Veröffentlichungstag und Bekanntmachung des Hinweises auf die Patenterteilung: **03.05.1995**
(21) Anmeldenummer: 92100486.7
(22) Anmeldetag: 14.01.1992
(51) Int. Cl.: F16G 13/16, F16L 3/01

(54) **Energieführungskette**
Supporting chain for energy carriers
Chaîne porteuse pour lignes de transport d'énergie

(30) Priorität: 22.02.1991 DE 4105651
(43) Veröffentlichungstag der Anmeldung: 26.08.1992
(73) Patentinhaber: Kabelschlepp Gesellschaft mit beschränkter Haftung, 57074 Siegen (DE)
(72) Erfinder: Wehler, Herbert, Dipl.-Ing., W-5908 Neunkirchen (DE); Weber, Willibald, W-5902 Netphen (DE); Mack, Paul-Werner, W-5963 Wenden (DE)
(74) Vertreter: Kahlhöfer, Hermann, Dipl.-Phys.

(56) Entgegenhaltungen:
- DE-C- 3 928 238
- DE-U- 9 102 121
- DE-U- 9 102 122

## Beschreibung

Die Erfindung betrifft eine Energieführungskette zum Führen von Energieleitungen, insbesondere Kabel und Schläuche von einem ortsfesten Anschluß zu einem beweglichen Verbraucher, mit aus zwei im Abstand voneinander und parallel zueinander angeordneten Kettenlaschen und diese miteinander verbindenden Traversen bestehenden Kettengliedern, deren gegenseitiger Schwenkwinkel mit Anschlageinsätzen begrenzt ist.

Derartige Energieführungsketten sind im Stand der Technik bekannt. Beispielsweise ist aus der DE-PS 39 28 238 eine Energieführungskette bekannt, die Kettenglieder aufweist, welche aus zwei im Abstand voneinander und parallel zueinander angeordneten Kettenlaschen sowie diese miteinander verbindenden Traversen bestehen und deren gegenseitiger Schwenkwinkel mit Anschlageinsätzen begrenzt ist. Die Anschlageinsätze sind über Stege miteinander verbunden, welche in korrespondierende Ausnehmungen der Kettenlaschen ortsfest eingreifen. Ferner weisen die Anschlageinsätze runde Köpfe auf, die in runde Bohrungen der Kettenlaschen eingreifen. Bei dieser vorbekannten Energieführungskette wird der Schwenkwinkel benachbarter Kettenglieder durch Anschlagnocken begrenzt, welche in gekrümmte Ausnehmungen einer benachbarten Kettenlasche eingreifen. Die an einer Kettenlasche angeformten Anschlagnocken bzw. eingeformten Ausnehmungen legen einen bestimmten, maximalen Schwenkwinkel fest, aus dem sich auch ein bestimmter Krümmungsradius für die Energieführungskette ergibt. Zur Verkleinerung des Schwenkwinkels bzw. Vergrößerung des Krümmungsradius können die Anschlageinsätze in die Ausnehmungen eingelegt werden. Die Anschlageinsätze bilden zusammen mit den sie verbindenden Stegen einen Ring.

Die vorbekannte Energieführungskette hat sich zum Führen von Energieleitungen von einem ortsfesten Anschluß zu einem beweglichen Verbraucher bewährt.

Ausgehend von diesem Stand der Technik liegt der Erfindung die **Aufgabe** zugrunde, eine Energieführungskette zu schaffen, deren Krümmungsradius in einfacher Weise durch Verdrehen oder Austauschen der Anschlageinsätze an verschiedene Anwendungsfälle angepaßt werden kann.

Als technische **Lösung** wird erfindungsgemäß eine Energieführungskette vorgeschlagen bei der die Anschlageinsätze unverdrehbar in korrespondierenden Ausnehmungen der Kettenlaschen angeordnet sind und zwei diametral sich gegenüberliegende Schlitze und Ausnehmungen aufweisen, welche in Verbindung mit Anschlagnocken den Schwenkwinkel benachbarter Kettenglieder bestimmen, wobei die Schlitze radial in den Anschlageinsätzen angeordnet sind, die Ausnehmungen kreisförmig ausgebildet und unter einem Winkel zu den Schlitzen in den Anschlageinsätzen angeordnet sind, und die Anschlageinsätze scheibenförmig ausgebildet sind.

Eine erfindungsgemäß ausgebildete Energieführungskette hat den **Vorteil,** daß der einfach ausgebildete Anschlageinsatz in die Ausnehmungen zweier benachbarter Kettenlaschen einsetzbar ist. Hierbei greift ein Anschlagnocken einer Kettenlasche in den Schlitz und hält den Anschlageinsatz unverdrehbar in der Ausnehmung dieser Kettenlasche. Der zweite Anschlagnocken ist in der kreisbogenförmig ausgebildeten Ausnehmung in dem Anschlageinsatz geführt, so daß die Größe der Ausnehmung den Schwenkwinkel benachbarter Kettenglieder bestimmt. Die Anschlageinsätze können mit verschieden großen kreisbogenförmigen Ausnehmungen zwischen die Kettenlaschen eingesetzt werden, so daß der Schwenkwinkel an die verschiedenen Anwendungsfälle der Energieführungskette anpaßbar ist.

Bei einer praktischen Ausführungsform sind die Anschlagnocken in der ersten Ausnehmung einer Kettenlasche in deren Längsrichtung ausgerichtet wogegen die Anschlagnocken in der zweiten Ausnehmung der Kettenlasche um den Winkel α versetzt angeordnet sind. Diese Ausgestaltung erleichtert den Zusammenbau und insbesondere das Einsetzen des Anschlageinsatzes der Energieführungskette. Der Winkel α beträgt vorzugsweise 90°, wodurch ein maximaler Schwenkwinkel zwischen benachbarten Kettenlaschen in beide Richtungen bezüglich der Längsrichtung der Energieführungskette möglich ist.

Eine gute Führung der Anschlagnocken in den kreisbogenförmig ausgebildeten Ausnehmungen wird dadurch erzielt, daß der Anschlageinsatz zwei diametral gegenüberliegend angeordnete Schlitze und zwei diametral gegenüberliegend angeordnete Ausnehmungen aufweist, welche den Schwenkwinkel zweier benachbarter Kettenglieder bestimmen. Bei dieser Ausgestaltung ist es ferner vorteilhaft, daß der Anschlageinsatz durch zwei in die Schlitze eingreifende Nocken unverdrehbar in einer Kettenlasche gehalten wird. Ferner kann der Anschlageinsatz um eine seiner Achsen X oder Y verdreht in die Ausnehmungen der Kettenlaschen eingelegt werden, wodurch der Schwenkwinkel zwischen zwei benachbarten Kettenlaschen entweder in die eine oder die andere Richtung festlegbar ist.

Eine sichere Begrenzung des Schwenkwinkels wird dadurch erzielt, daß die kreisbogenförmige Ausnehmung des Anschlageinsatzes zwei Anschlagflächen hat und daß der Winkel α zwischen einer der Anschlagflächen und dem Schlitz 90° beträgt, wodurch die Kettenlaschen aus einer gestreckten Lage in eine abgewinkelte Lage überführbar sind. Erstreckt sich beispielsweise die kreisbogenförmige Ausnehmung von der um 90° zu dem Schlitz versetzt angeordneten Anschlagfläche in Uhrzeigerrichtung, so sind zwei benachbarte Kettenlaschen aus der gestreckten Lage um den durch die kreisbogenförmige Ausnehmung bestimmten Winkel in Uhrzeigerrichtung verschwenkbar. Hingegen sind zwei benachbarte Kettenlaschen aus der gestreckten Lage entgegen der Uhrzeigerrichtung verschwenkbar, wenn sich die kreisbogenförmige Ausnehmung von der um 90° versetzt zu dem Schlitz angeordneten Anschlagfläche in mathematisch positiver Richtung erstreckt. Durch diese einfache Ausgestaltung des Anschlageinsatzes ist es auch möglich, den Schwenkwinkel durch einfaches Verdrehen der Anschlageinsätze einer Energieführungskette um ihre X- oder Y-Achse zu verändern.

Um eine Bestimmung der Verschwenkrichtung der Energieführungskette ohne aufwendige Demontage der Kettenlaschen durchführen zu können, wird erfindungsgemäß vorgeschlagen, daß in den Kettenlaschen Öffnungen angeordnet sind, durch die Kennzeichnungen auf dem Anschlageinsatz erkennbar sind. Diese Kennzeichnungen können beispielsweise in Form von Buchstaben und einer Zahl auf dem Anschlageinsatz angeordnet sein. Die Buchstaben bezeichnen die Schwenkrichtung und die Zahlen bezeichnen die Größe des Schwenkwinkels.

Schließlich wird vorgeschlagen, daß der Anschlageinsatz eine zentrale Bohrung hat, durch die entsprechende, in den Ausnehmungen angeordnete Zapfen greifen und daß die Kettenlaschen benachbarter Kettenglieder mittels in den Zapfen angeordneter Verbindungselemente miteinander verbunden sind. Diese Ausgestaltung ermöglicht eine leichte Montage der Energieführungskette. Ferner wird durch die zentrale Bohrung in dem Anschlageinsatz und den durch diese Bohrung greifenden Zapfen der Kettenlasche eine lagegenaue Anordnung des Anschlageinsatzes in den Ausnehmungen zweier benachbarter Kettenlaschen sichergestellt. Hierdurch wird ein machineller Zusammenbau der Energieführungsketten ermöglicht.

Weitere Einzelheiten und Vorteile der erfindungsgemäßen Energieführungskette ergeben sich aus der nachfolgenden Beschreibung der zugehörigen Zeichnungen, in denen eine bevorzugte Ausführungsform schematisch dargestellt worden ist. In den Zeichnungen zeigen:

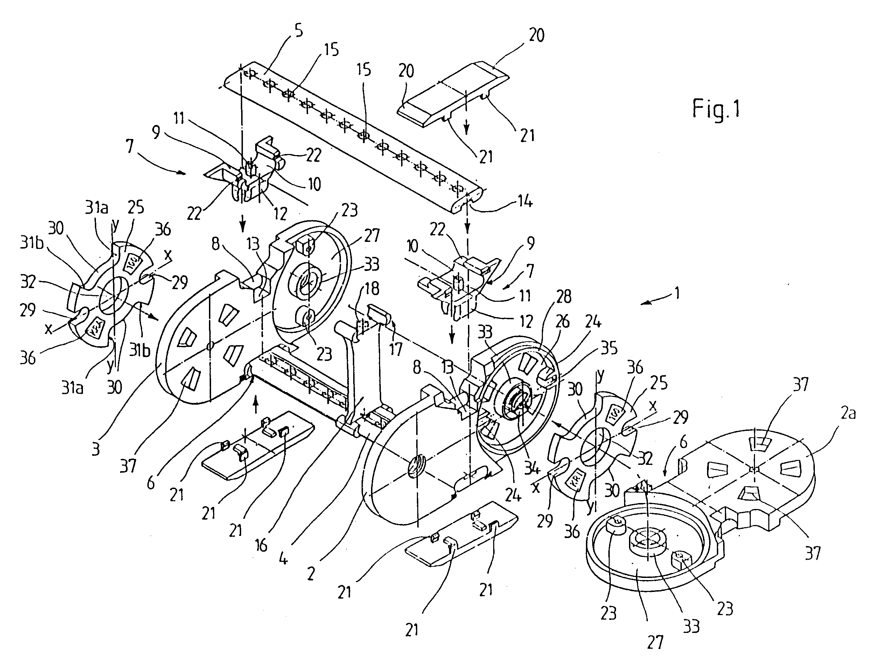

- Fig. 1: ein Kettenglied einer Energieführungskette in einem perspektivisch dargestellten Sprengbild;

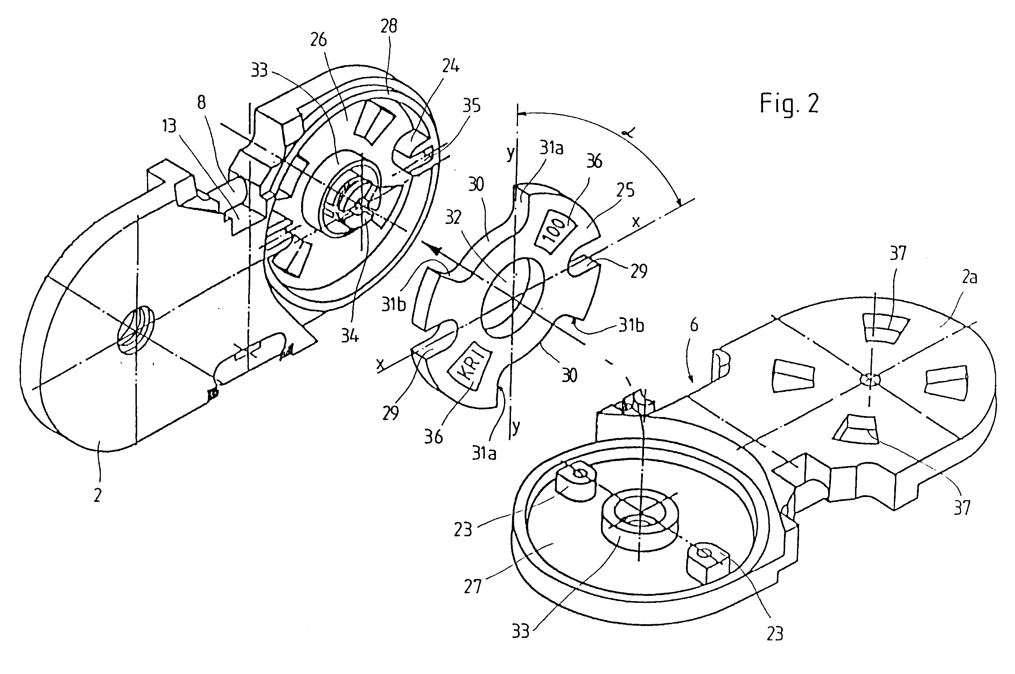

- Fig. 2: zwei benachbarte Kettenlaschen mit einem Anschlageinsatz in einem perspektivisch dargestellten Sprengbild;
- Fig. 3: eine in Uhrzeigerrichtung abwinkelbare Energieführungskette und
- Fig. 4: eine gegen die Uhrzeigerrichtung abwinkelbare Energieführungskette.

Ein Kettenglied 1 besteht aus zwei im Abstand voneinander und parallel zueinander angeordneten Kettenlaschen 2 und 3, die mit Traversen 4 und 5 untereinander verbunden sind. Die Traverse 4 hat auf ihrer Gesamtlänge einen abgeflachten Querschnitt mit abgerundeten Schmalseiten und kann in mit Hinterschneidungen versehene angeschnittene Ausnehmungen 6 in den Schmalseiten der Kettenlaschen 2 und 3 eingelegt und durch Verdrehen um ihre Längsachse kraft- und formschlüssig mit den Kettenlaschen 2, 3 verbunden werden. Die Traverse 5 hat ebenfalls auf ihrer gesamten Länge einen abgeflachten Querschnitt mit abgerundeten Schmalseiten und kann in schwenkbar an den Schmalseiten der Kettenlaschen 2 und 3 angeordneten Drehgelenken 7 eingelegt werden.

Die Drehgelenke 7 bestehen aus einem, in einer der Kettenlaschen 2, 3 angeordnetm Zapfen 8 und einer darauf schwenkbar aufgesteckten Halterung 9, welche eine im wesentlichen U-förmige Ausnehmung 10 hat. In dieser Ausnehmung 10, in der die Traverse 5 durch Verdrehen um ihre Längsachse kraft- und formschlüssig mit der Halterung 9 verbunden wird, ist ein Stift 11 angeordnet. Die Halterung 9 hat ferner an ihrer Unterseite eine Federklammer 12, mit der die Halterung 9 auf den in einer Ausnehmung 13 und in Längsrichtung der Kettenlasche 2, 3 verlaufenden Zapfen 8 gesteckt ist.

Die Traversen 4 und 5 haben auf ihrer gesamten Länge einen abgeflachten Querschnitt mit abgerundeten Schmalseiten. In jeweils einer Seite der Traversen 4 und 5 ist eine in Längsrichtung der Traverse 4, 5 verlaufende Nut 14 angeordnet. Ferner weisen die Traversen 4 und 5 eine Vielzahl von Bohrungen 15 auf. In die beiden äußeren Bohrungen 15 der Traverse 5 greifen bei in die Halterung 9 eingedrehter Traverse 5 die Stifte 11 ein, so daß die Traverse 5 quer zur Längsrichtung des Kettengliedes 1 unverschiebbar gehalten ist. Die Traversen 4 und 5 können wahlweise derart an den Kettenlaschen 2, 3 befestigt werden, daß die Nuten 14 nach innen oder nach außen gerichtet angeordnet sind.

Zwischen den Traversen 4, 5 ist ein Trennsteg 16 angeordnet, der am oberen und unteren Ende mit U-förmigen Halterungen 17 versehen ist, in welchen Stifte 18 für den Eingriff in die Bohrungen 15 der Traversen 4, 5 befestigt sind. Die Länge der Stifte 18 entspricht der Tiefe der Nut 14. Auf diese Weise ist der Trennsteg 16 in Längsrichtung der Traversen 4, 5 verschiebbar, wenn die Traversen 4, 5 mit nach innen gerichteten Nuten 14 befestigt sind. Sind die Nuten 14 der Traversen 4, 5 nach außen gedreht, greifen die Stifte 18 des Trennstegs 16 in die Bohrungen 15 der Traversen 4, 5, so daß der Trennsteg 16 nicht in Längsrichtung der Traversen 4, 5 verschiebbar ist. Es ist auch möglich, mehrere Trennstege 16 zwischen den Traversen 4, 5 eines Kettengliedes 1 einzusetzen.

An den oberen und unteren Schmalseiten der Kettenlaschen 2, 3 sind Gleitkufen 19 lösbar befestigt, die aufeinander gleiten, wenn das obere Trum einer Energieführungskette sich auf dem unteren Trum abstützt. Dabei ist die Länge der Gleitkufen 19 so bemessen, daß die Abstände zwischen den Gleitkufen 19 benachbarter Kettenlaschen 2, 2a überbrückt werden. Die Gleitkufen sind an der unteren Schmalseite der Kettenlaschen 2, 3 unmittelbar und an den oberen Schmalseiten der Kettenlaschen 2, 3 mittelbar befestigt, nämlich an der Halterung 9 des Drehgelenks 7.

Jede Gleitkufe 19 ist plattenförmig ausgebildet und hat an ihrer den Schmalseiten der Kettenlaschen 2, 3 abgewandten Oberfläche zwei in Längsrichtung angeordnete Abschrägungen 20. An der Unterseite der Gleitkufen 19 sind vier Rastelemente 21 angeordnet, die in entsprechende Ausnehmungen 22 an den Kettenlaschen 2, 3 bzw. an den Halterungen 9 einschiebbar sind.

Der gegenseitige Schwenkwinkel benachbarter Kettenglieder wird durch Anschlagnocken 23 und 24 und einen Anschlageinsatz 25 begrenzt. Die Anschlagnocken 24 der Kettenlasche 2 sind in einer Ausnehmung 26 der Kettenlasche 2 angeordnet und in Längsrichtung der Kettenlasche 2 ausgerichtet. Die Anschlagnocken 23 an einem Ende der Kettenlasche 2a sind im Vergleich zu den Anschlagnocken 24 am anderen Ende der gleichen Kettenlasche 2a um 90° versetzt in entsprechenden Ausnehmungen 26, 27 angeordnet. Demzufolge steht die Verbindungslinie zwischen den Anschlagnocken 23 rechtwinklig zu der Längsachse des Kettengliedes 2a, während die beiden anderen Anschlagnocken 24 auf der Längsachse der Kettenlasche 2a liegen. Die Kettenlaschen 2, 3 haben einen die Ausnehmung 26 umgreifenden Rand 28, dessen Außendurchmesser geringfügig kleiner als der Innendurchmesser der kreisförmigen Ausnehmung 27 ist, in welche der Rand 28 eingreift.

Der zwischen den benachbarten Kettenlaschen 2 und 2a in die Ausnehmungen 26, 27 eingesetzte Anschlageinsatz 25 ist im wesentlichen scheibenförmig ausgebildet. Der Anschlageinsatz 25 hat zwei diametral gegenüberliegende Schlitze 29 und zwei Ausnehmungen 30. Die Schlitze 29 haben eine den Anschlagnocken 23 bzw. 24 entsprechende Breite, wogegen sich die Ausnehmungen 30 über einen den Schwenkwinkel benachbarter Kettenglieder bestimmenden Kreisbogenabschnitt erstrecken. Die Ausnehmungen 30 haben jeweils eine Anschlagfläche 31a und eine Anschlagfläche 31b, wobei auch die Anschlagflächen 31a und 31b jeweils diametral gegenüberliegend an dem Anschlageinsatz 25 angeordnet sind. In dem dargestellten Ausführungsbeispiel sind die Anschlagflächen 31a um 90° im mathematisch positiven Drehsinn versetzt zu den Schlitzen 29 angeordnet. Der Winkel zwischen den Anschlagflächen 31a und 31b beträgt in dem dargestellten Ausführungsbeispiel ungefähr 60°.

Die Anschlageinsätze 25 haben eine zentrale Bohrung 32 durch die entsprechende, in den Ausnehmungen 26, 27 angeordnete Zapfen 33 greifen. Die Kettenlaschen 2, 2a benachbarter Kettenglieder werden mittels Verbindungselementen 34 miteinander verbunden, wobei die Anschlageinsätze 25 derart in der Ausnehmung 26 bzw. 27 der Kettenlaschen 2, 2a angeordnet sind, daß die Schlitze 29, den Anschlagnocken 24 umgreifen, der einen in radialer Richtung der Ausnehmung 26 verlaufenden Schlitz 35 aufweist. Hierdurch ist der Anschlageinsatz 25 unverdrehbar in der Kettenlasche 2 gehalten. Bei dieser Anordnung sind die Anschlagnocken 23 in der Kettenlasche 2a in den diametral gegenüberliegenden Ausnehmungen 30 des Anschlageinsatzes 25 geführt. Durch die Anschlagflächen 31a und 31b wird der gegenseitige Schwenkwinkel zwischen dem Kettenglied 1 und einem nur durch die Kettenlasche 2a dargestellten benachbarten Kettenglied begrenzt. Durch die rechtwinklige Anordnung der Anschlagflächen 31a zu den Schlitzen 29 und der Ausbildung der Ausnehmung 30 können die benachbarten Kettenglieder aus einer gestreckten Lage nur in eine Richtung um einen dem Winkel der Ausnehmung 30 entsprechenden Winkel verschwenkt werden. Um die Verschwenkrichtung der Kettenglieder zueinander zu verändern, ist es lediglich notwendig, die Anschlageinsätze 25 um 180° um eine ihrer Achsen X oder Y verdreht in die Ausnehmungen 26, 27 einzulegen.

Zur Anzeige der Schwenkrichtung und des Schwenkwinkels haben die aus Kunststoff bestehenden Anschlageinsätze 25 eingeformte Kennzeichnungen 36, welche durch entsprechende Öffnungen 37 in den Kettenlaschen 2, 3, 2a erkennbar sind. Die Kennzeichnungen 36 weisen sowohl eine Buchstabenkombination als auch eine Zahl auf, wobei die Buchstabenkombination die Richtung des Schwenkwinkels, also in oder gegen die Uhrzeigerrichtung, und die Zahl die Größe des Schwenkwinkels angeben. Somit kann sowohl die Schwenkrichtung als auch die Größe des Schwenkwinkels ohne Demontage der Kettenlaschen 2, 2a festgestellt werden.

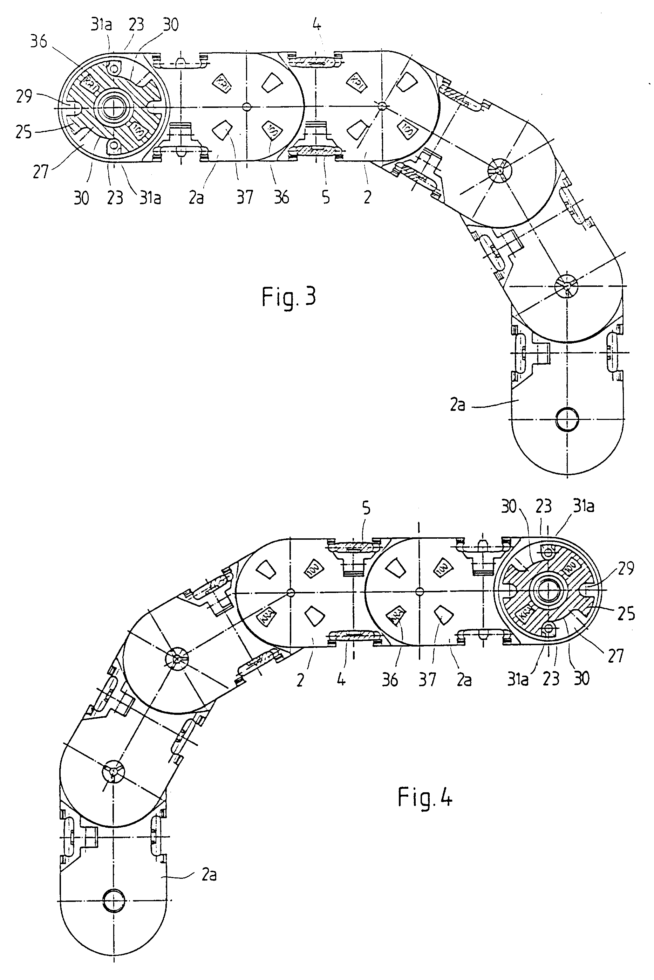

In der Fig. 3 ist ein Abschnitt einer Energieführungskette dargestellt, deren Kettenglieder 1 aus einer gestreckten Lage in Uhrzeigerrichtung geschwenkt sind. Die kreisbogenförmig ausgebildeten Ausnehmungen 30 erstrecken sich in Uhrzeigerrichtung ausgehend von der um 90° in Uhrzeigerrichtung zu dem Schlitz 29 angeordneten Anschlagfläche 31a.

Die in Fig. 4 dargestellte Energieführungskette entspricht im wesentlichen der Energieführungskette gemäß Fig. 3, jedoch sind bei dieser Energieführungskette die Anschlageinsätze 25 um 180° um eine ihrer Achsen X oder y verdreht in die Ausnehmungen 26, 27 eingelegt, so daß sich nunmehr die kreisbogenförmig ausgebildeten Ausnehmungen 30 bezüglich der hiervon in Uhrzeigerrichtung angeordneten Schlitze 29 in Richtung gegen den Uhrzeigersinn erstrecken.

Bei der in Fig. 3 dargestellten Energieführungskette sind die Drehgelenke 7 an der dem Innenradius der Krümmung zugewandten Seite der Kettenlaschen 2, 2a, 3 angeordnet, so daß die Traversen 5 der einzelnen Kettenglieder 1 an dieser Seite aufklappbar sind. Die dem äußeren Krümmungsradius der Energieführungskette zugewandten Traversen 4 sind aus den Ausnehmungen 6 ausdrehbar, so daß die Energieführungskette auch auf dieser Seite zu öffnen ist.

Bei der in Fig. 4 dargestellten Energieführungskette sind die Drehgelenke 7 mit den darin angeordneten Traversen 5 auf der dem äußeren Krümmungsradius zugewandten Seite der Kettenlaschen 2, 2a, 3 angeordnet, während auf den gegenüberliegenden Seiten der Kettenlaschen 2, 2a, 3 Traversen 4 in die Ausnehmungen 6 eingedreht sind. Bei dieser Energieführungskette kann die dem äußeren Krümmungsradius zugewandte Seite der Kettenlaschen durch Aufklappen der in den Drehgelenken 7 angeordneten Traversen 5 geöffnet werden, während ein Öffnen der einzelnen Kettenglieder 1 auf der dem inneren Krümmungsradius zugewandten Seite der Kettenlaschen 2, 2a, 3 durch einfaches Ausdrehen der Traversen 4 aus den Ausnehmungen 6 möglich ist.

### Bezugszeichenliste

- 1: Kettenglied
- 2: Kettenlasche
- 2a: Kettenlasche
- 3: Kettenlasche
- 4: Traverse
- 5: Traverse
- 6: Ausnehmung
- 7: Drehgelenk
- 8: Zapfen
- 9: Halterung
- 10: Ausnehmung
- 11: Stift
- 12: Federklammer
- 13: Ausnehmung
- 14: Nut
- 15: Bohrung
- 16: Trennsteg
- 17: Halterung
- 18: Stift
- 19: Gleitkufe
- 20: Abschrägung
- 21: Rastelement
- 22: Ausnehmung
- 23: Anschlagnocken
- 24: Anschlagnocken
- 25: Anschlageinsatz
- 26: Ausnehmung
- 27: Ausnehmung
- 28: Rand
- 29: Schlitz
- 30: Ausnehmung
- 31a: Anschlagfläche
- 31b: Anschlagfläche
- 32: Bohrung
- 33: Zapfen
- 34: Verbindungselement
- 35: Schlitz
- 36: Kennzeichnung
- 37: Öffnung

## Patentansprüche

1. Energieführungskette zum Führen von Energieleitungen, insbesondere Kabel und Schläuche von einem ortsfesten Anschluß zu einem beweglichen Verbraucher, mit aus zwei im Abstand voneinander und parallel zueinander angeordneten Kettenlaschen (2,3) und diese miteinander verbindenden Traversen (4,5) bestehenden Kettengliedern (1), deren gegenseitiger Schwenkwinkel mit Anschlageinsätzen (25) begrenzt ist,
**dadurch gekennzeichnet,**
daß die Anschlageinsätze (25) unverdrehbar in korrespondierenden Ausnehmungen der Kettenlaschen (2,2a) angeordnet sind,
daß die Anschlageinsätze (25) zwei diametral gegenüberliegend angeordnete Schlitze (29) und Ausnehmungen (30) aufweisen, welche den Schwenkwinkel zweier benachbarter Kettenglieder (1) bestimmen,
daß die Schlitze (29) radial in den Anschlageinsätzen (25) angeordnet sind,
daß die Ausnehmungen (30) kreisbogenförmig ausgebildet und unter einem Winkel ( ) zu den Schlitzen (29) in dem Anschlageinsatz (25) angeordnet sind,
daß in den Ausnehmungen (26,27) der Kettenlaschen (2,2a) Anschlagnocken (23,24) angeordnet sind, welche in die Schlitze (29) und in die Ausnehmungen (30) hineinragen, und daß die Anschlageinsätze (25) scheibenförmig ausgebildet sind.

2. Energieführungskette nach Anspruch 1, dadurch gekennzeichnet, daß die Anschlagnocken (24) in der Ausnehmung (26) angeordnet und in Längsrichtung der Kettenlasche (2,2a) ausgerichtet sind, und daß die Anschlagnocken (23) in der Ausnehmung (27) in der Kettenlasche (2,2a) angeordnet und im Vergleich zu den Anschlagnocken (24) um den Winkel α versetzt angeordnet sind.

3. Energieführungskette nach Anspruch 1, dadurch gekennzeichnet, daß der Winkel α 90° beträgt.

4. Energieführungskette nach Anspruch 1, dadurch gekennzeichnet, daß die Ausnehmung (30) zwei Anschlagflächen (31a,31b) hat und daß der Winkel (α) zwischen der Anschlagfläche (31a) und dem Schlitz (29) 90° beträgt.

5. Energieführungskette nach Anspruch 1, dadurch gekennzeichnet, daß in den Kettenlaschen (2,2a,3) Öffnungen (27) angeordnet sind, durch die Kennzeichnungen (36) auf dem Anschlageinsatz (25) erkennbar sind.

## Claims

1. A power guide chain for guiding power conductors, in particular cables and pipes, from a stationary terminal to a movable consumer, having chain links (1) consisting of two link plates (2, 3) which are arranged parallel to and spaced from each other and cross-pieces (4, 5) connecting together the link plates, the pivot angle of each chain link being delimited by stop inserts (25),
characterised in that,
the stop inserts (25) are arranged non-rotationally in corresponding recesses of the link plates (2, 2a),
the stop inserts (25) have two diametrally oppositely disposed slots (29) and recesses (30) which define the pivot angle of two adjacent chain links (1),
the slots (29) are arranged radially in the stop inserts (25),
the recesses (30) are arcuate in design and are arranged at an angle (α) to the slots (29) in the stop insert (25),
stop cams (23, 24) are arranged in the recesses (26, 27) of the link plates (2, 2a), the stop cams projecting into the slots (29) and into the recesses (30), and that the stop inserts (25) are disc-like in design.

2. A power guide chain according to Claim 1, characterised in that the stop cams (24) are arranged in the recess (26) and are aligned in the longitudinal direction of the link plate (2, 2a), and the stop cams (23) are arranged in the recess (27) in the link plate (2, 2a) and are displaced by the angle α in relation to the stop cams (24).

3. A power guide chain according to Claim 1, characterised in that the angle α is 90°.

4. A power guide chain network according to Claim 1, characterised in that the recess (30) has two stop faces (31a, 31b) and that the angle (α) between the stop face (31a) and the slot (29) is 90°.

5. A power guide chain according to Claim 1, characterised in that openings (27) are arranged in the link plates (2, 2a, 3), through which openings the markings (36) on the stop insert (25) can be seen.

## Revendications

1. Chaîne de guidage d'énergie pour guider des conducteurs d'énergie, en particulier des câbles ou des tuyaux flexibles, d'un raccord fixe à un organe utilisateur mobile, ladite chaîne étant formée de maillons (1) qui sont constitués de deux flasques (2, 3), disposés à distance l'un de l'autre et parallèlement entre eux, et de deux traverses (4, 5) qui relient les flasques entre eux, l'angle de pivotement réciproque entre lesdits maillons (1) étant limité par des butées rapportées (25), caractérisée en ce que les butées rapportées (25) sont disposées sans possibilité de rotation dans des évidements correspondants des flasques (2, 2a), en ce que les butées rapportées (25) comportent deux fentes (29) et deux évidements (30) qui sont diamétralement opposés et qui définissent l'angle de pivotement de deux maillons voisins (1), en ce que les fentes (29) sont ménagées radialement dans les butées rapportées (25), en ce que les évidements (30) présentent la forme d'un arc de cercle et forment un angle (α) avec les fentes (29) de la butée rapportée (25), en ce que, dans les évidements (26, 27) des flasques (2, 2a), sont disposés des taquets de butée (23, 24) qui pénètrent dans les fentes (29) et dans les évidements (30), et en ce que les butées rapportées (25) sont de forme circulaire.

2. Chaîne de guidage d'énergie selon la revendication 1, caractérisée en ce que les taquets de butée (24) sont disposés dans l'évidement (26) et orientés dans le sens longitudinal du flasque (2, 2a), et en ce que les taquets de butée (23) sont disposés dans l'évidement (27) du flasque (2, 2a) et sont décalés de l'angle α par rapport aux taquets de butée (24).

3. Chaîne de guidage d'énergie selon la revendication 1, caractérisée en ce que l'angle α est égal à 90°.

4. Chaîne de guidage d'énergie selon la revendication 1, caractérisée en ce que l'évidement (30) comporte deux faces de butée (31a, 31b), et en ce que l'angle (α) entre la face de butée (31a) et la fente (29) est égal à 90°.

5. Chaîne de guidage d'énergie selon la revendication 1, caractérisée en ce que, dans les flasques (2, 2a, 3), sont ménagées des ouvertures (27), à travers lesquelles des marquages (36) apposés sur la butée rapportée (25) sont visibles.
